# EUROPÄISCHE PATENTSCHRIFT

(11) **EP 2 803 583 B1**
(45) Veröffentlichungstag und Bekanntmachung des Hinweises auf die Patenterteilung: **13.07.2016**
(21) Anmeldenummer: 14075027.4
(22) Anmeldetag: 07.05.2014
(51) Int. Cl.: B64D 17/34

(54) **Zusatzeinrichtung für Gleit- und Fallschirme**
Additional device for paragliders and parachutes
Dispositif supplémentaire pour parachute et parapente

(30) Priorität: 07.05.2013 DE 102013007799
(43) Veröffentlichungstag der Anmeldung: 19.11.2014
(73) Patentinhaber: Spekon Sächsische Spezialkonfektion GmbH, 02782 Seifhennersdorf (DE)
(72) Erfinder: Koser, Thomas, 72218 Wildberg (DE)
(74) Vertreter: Seltmann, Reinhard

(56) Entgegenhaltungen:
- EP-A1- 1 308 386
- EP-A2- 1 752 378
- JP-A- 2003 320 998
- US-A- 4 678 145
- US-A- 5 005 785

## Beschreibung

Die Erfindung betrifft eine Zusatzausrüstung für vorzugsweise Gleitschirme zur Koordination der Trag- und/oder Lenkseile, die im Allgemeinen als Slider oder Schieber bekannt ist, im weiteren als Slider bezeichnet ist, da nach Meinung des Anmelders der Begriff "Slider" in Fachkreisen als der Gebräuchlichere empfunden wird.

Um eine Trennung und Koordination der Trag- und Lenkseile bis zu einem an einem Hauptschirm hängenden Gleitschirmspringer zu erreichen, ist über diesem eine Art Platte, die ebenfalls aus flexiblem Material sein kann, als Distanzhalter zwischen den Trag- und Lenkseilen zu deren Koordination angeordnet. Eine solche ist in JP 2003-146 296 A dargestellt. Der ausschließliche Zweck dieser Zusatzeinrichtung wurde bereits erwähnt.

Auch in JP 2003-320 998 A, welches die Merkmale des Oberbegriffes des Anspruches 1 zeigt, wird grundsätzlich derartiges vorgeschlagen. Zunächst ist eine Art Fläche vorhanden, die als Slider dienen soll und in allen 4 Ecken Oesen aufweist, die von den Trag- und Lenkseilen des darüber ausgebildeten Fallschirmes durchdrungen werden. Um das Flattern der Fläche zu verhindern, weist diese Fläche in Flugrichtung flexible Versteifungen in Form von Taschen auf, deren Wirkung durch den sich bildenden Luftstau ein Flattern der Fläche mit zunehmender Fluggeschwindigkeit verhindern sollen. Ein aerodynamisches Tragflügelprofil dieser Versteifungen ist nicht erkennbar. Die in Flugrichtung hinten liegenden Oesen führen unlösbar die Trag- und Lenkseile. Demzufolge gehen davon Spannkräfte aus, die zur Fixierung des Sliders auf den Trag- und Lenkseilen führen. Der Abstand zwischen den Oesen des Sliders wird damit im wesentlichen durch die Fixierung des Sliders auf den Trag- und Lenkseilen bestimmt, und die Wirkung zweckgebunden integrierter Taschen ist eingeschränkt.

Maßgebend für die Einschätzung des Leistungsvermögens eines Gleitschirmes ist dessen Gleitfähigkeit, die durch die Gleitzahl, dem Quotienten aus Absprunghöhe und horizontaler Entfernung zwischen Absprungpunkt und Aufsetzpunkt bestimmt wird.

Es hat nicht an Bestreben gefehlt, diese Gleitzahl zu verbessern. So wird deshalb nach EP 1 752 378 A2 vorgeschlagen, beabstandet zum Slider und oberhalb dessen eine Art flexible Fläche zwischen den Trag- und/oder Lenkseilen vorzusehen, die durch die Trag- und/oder Lenkseile fixiert ist und zusätzlich das Gleiten verbessert. Dabei handelt es sich mehr um ein Bauteil mit der Funktion eines Luftankers.

Aufgabe der vorliegenden Erfindung ist es ebenfalls, das Gleiten eines vorzugsweise Gleitschirmes weiter zu verbessern.

Die Aufgabe wird durch einen Slider gemäß Anspruch 1 gelöst. Ein Slider weist auf seiner nach oben gewandten Fläche weitestgehend vollflächig eine maximale Vielzahl von Kammern auf, die denen des Gleitschirmes prinzipell ähnlich, in Gleitrichtung ausgerichtet und an ihrer Vorderseite zum Zweck des Lufteintritts offen sind und die Funktion einer Staukammer zu erfüllen in der Lage sind. Die Kammern sind vom Zu-schnitt her so gestaltet, dass sich bei deren Aufblasen durch die Luft ein Flügelprofil einstellt.

Diese Kammern können ebenso von wenigstens einer Randzone her partiell verschlossen sein, indem dort bei prall gefülltem Flügel und dem Vorhandensein anderer flexibler Teile eine strömungstechnisch vorteilhaftere Flügelvorderkante erreicht wird, wie das bereits für Gleitschirme vorgeschlagen worden ist.

In der unmittelbaren Randzone links und rechts ist im vorderen Teil des Sliders jeweils mindestens eine Führungsoese eingearbeitet, die einerseits zur Fixierung des Sliders in der Höhe an den Tragseilen dient, zum anderen zu seinem Festlegen in Gleitrichtung.

Des weiteren sind an der Hinterkante des Sliders im jeweiligen Eckbereich ebenfalls Hilfsoesen eingearbeitet, durch die jeweils eine seitlich herausstehende flexible Oese geführt ist, die durch eine Art an der Unterseite des Sliders befestigten Riegel gegen Herausrutschen aus der Hilfsoese blockiert ist. Vorzugsweise ist jede flexible Oese, bezogen auf den Slider, in diagonaler Richtung desselben hervorstehend.

Ebenfalls vorzugsweise ist der an der Unterkante des Sliders geführte Riegel als seitlich in die durch die Hilfsoese hindurchragende flexible Oese hineinragend ausgeführt. Die an der Unterseite des Sliders befindliche Führung ist vorzugsweise mittig an der Unterseite des Sliders unterbrochen, sodass das Seil partiell freiliegend ausgeführt ist und der Springer bei Feststellen der notwendigen Bedingungen zur beabsichtigten Nutzung des Sliders die Blockade eines Führungsringes durch die flexiblen Oesen in den Hilfsoesen aufheben kann. Der Durchmesser des Seiles und der Durchmesser der Hilfsoese sind so aufeinander abgestimmt, dass das Seil nicht mit durch die Hilfsoese hindurch gezogen werden kann.

Durch die Orientierung des Riegels auf der Unterseite des Sliders ist eine optische Kontrolle des Aufhebens der Blockade durch den Springer möglich, und das möglichst vollflächige Anordnen der Kammern auf der Oberseite des Sliders wird nicht gestört.

Die seitlich herausstehenden vorzugsweise flexiblen Oesen umgreifen jeweils einen Führungsring für weitere Trag- und /oder Steuerseile. Der Sinn der Führungsringe besteht darin, den Slider zunächst in der Waagerechten zu orientieren. Hat sich der Hauptschirm entfaltet und haben sich die Kammern des Sliders gefüllt, löst der Springer die Riegel wie bereits beschrieben. Der Slider richtet sich selbsttätig im Luftstrom aus und fliegt eigenständig als weitere Tragfläche mit, nur durch die mittig in der unmittelbaren Randzone links und rechts angeordneten Führungsoesen im Verhältnis zum Hauptschirm festgelegt. Diese Ausbildung erhöht entscheidend die Gleitfähigkeit eines so ausgerüsteten Gleitschirms.

Die Flächen links und rechts zwischen der Führungsoese und der Hilfsoese sind in Flugrichtung gesehen ebenfalls mit je einer Kammer besetzt.

Eine Vorzugsvariante sieht vor, die Kammern so auszubilden, dass zwei Kammern durchdringend eine Diagonalstrebe ausgeführt ist, indem diese von links unten in einer ersten Kammer den Steg zwischen der ersten und einer zweiten Kammer durchdringend nach rechts oben in der zweiten Kammer und sich anschließend in einer sich anschließenden dritten Kammer wieder den Steg zwischen dritter Kammer und einer vierter Kammer durchdringend nach rechts unten in der Ecke der vierten Kammer führend ausgebildet ist, wobei sich auf der anderen Seite eines weiteren Steges die Diagonalstrebe wieder nach oben führend anschließt. Dieser merkmalsgemäße Aufbau ist sich über die gesamte Breite des Sliders erstreckend ausgeführt.

Diese Ausbildung der Kammern fördert das Aufspreizen der Kammern im Slider.

Durch die erfindungsgemäße Ausbildung eines Gleitschirmes ist eine Verbesserung der Gleitzahl gegeben, indem ein Streckenflug weiter ausgedehnt werden kann. Insbesondere für die Gestaltung und Anwendung taktischer Schirme kann das von erheblicher Bedeutung sein.

Die Erfindung soll nachfolgend an einem Ausführungsbeispiel näher beschrieben werden.

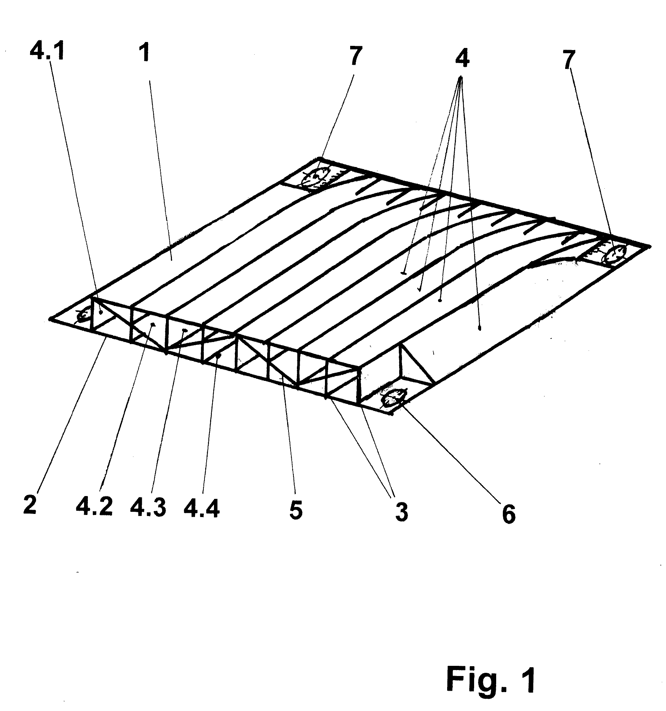

In der zugehörigen Zeichnung zeigt
- Fig.1: die perspektivische Darstellung eines prinzipell erfindungsgemäß ausgestalteten Sliders,

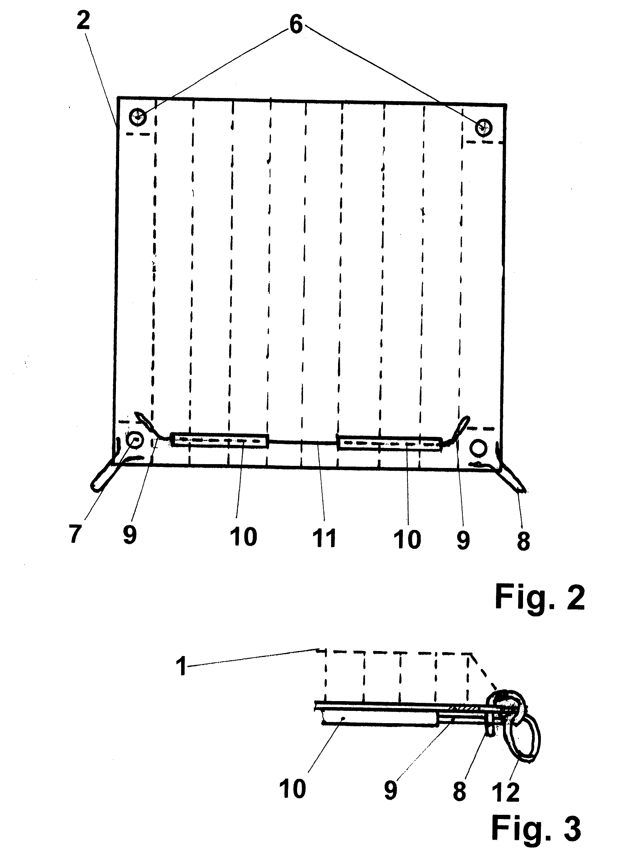

- Fig. 2: die Unterseite eines prinzipiell erfindungsgemäß gestalteten Sliders in der Ansicht, wobei die Gleitrichtung oben ist und
- Fig. 3: eine Seitenansicht der Ecke eines Sliders, wobei im dargestellten Zustand die flexible Oese gegenüber der Hilfsoese durch den seilartigen Riegel blockiert ist.

Zwischen Oberteil 1 und Unterteil 2 eines erfindungsgemäß veränderten Sliders sind in vertikaler Richtung Stege 3 ausgebildet, sodass Kammern 4 entstehen.

Die Kammern 4 sind beispielhaft vorzugsweise so ausgeführt, dass eine quer zur Gleitrichtung verlaufende Diagonalstrebe 5 zwei Kammern durchdringend ausgeführt ist, also von links unten in einer ersten Kammer 4.1 den Steg zwischen der ersten Kammer 4.1 und einer zweiten Kammer 4.2 durchdringend nach rechts oben in der zweiten Kammer 4.2 und sich anschließend in einer folgenden dritten Kammer 4.3 wieder den Steg zwischen dritter Kammer 4.3 und vierter Kammer 4.4 durchdringend nach rechts unten in der Ecke der vierten Kammer 4.4 führend. Dort schließt sich auf der anderen Seite eines weiteren Steges 3 die Diagonalstrebe 5 wieder nach oben führend an.

Alle Kammern 4 sind so angeordnet, dass sie mit ihren Öffnungen in Flugrichtung liegen.Die Zuschnitte sind so gewählt, dass sich beim Füllen der Kammern 4 durch stauende Luft ein Flügelprofil einstellt.

Die beiden äußeren der Kammern 4 sind kürzer ausgeführt, um die Möglichkeit zu haben, in den Eckbereichen des Sliders vor der ersten und der letzten Kammer 4 jeweils links und rechts eine Führungsöse 6 einzubringen.

Diese dient zur Fixierung des Sliders in der Höhe an den Tragseilen und zu seinem Festlegen in Gleitrichtung.

An der Hinterkante des Sliders im jeweiligen Eckbereich sind Hilfsoesen 7 eingearbeitet, durch die jeweils eine seitlich herausstehende flexible Oese 8 geführt ist, die durch eine Art an der Unterseite des Sliders befestigten Riegel 9 gegen Herausrutschen aus der Hilfsoese 7 blockiert ist. Damit ist der Slider zunächst an 4 Punkten gegenüber dem Hauptschirm festgelegt.

Beispielhaft ist jede flexible Oese 8, bezogen auf den Slider, zum Zweck des günstigsten Krafteintrages in diagonaler Richtung desselben hervorstehend.

Ebenfalls beispielhaft ist der an der Unterkante des Sliders geführte Riegel 9 aus einem Seil 11 bestehend und als seitlich in die durch die Hilfsoese 7 hindurchragende flexible Oese 8 hineinragend und diese gegen Hindurchziehen durch die Hilfsoese 7 blockierend ausgeführt. Die an der Unterseite des Sliders befindliche Führung 10 ist vorzugsweise mittig an der Unterseite des Sliders unterbrochen, sodass das Seil 11 partiell freiliegt. Damit hat der Springer bei Feststellen der notwendigen Bedingungen zur erwünschten Nutzung des Sliders die Möglichkeit, an dem partiell freiliegenden Seil zu ziehen und so die Blockade der flexiblen Oesen 8 in den Hilfsoesen 7 aufzuheben, sodass der Slider nur noch an zwei Punkten gegenüber dem Hauptschirm fixiert ist.

Die seitlich herausstehenden vorzugsweise flexiblen Oesen 8 umfassen jeweils einen Führungsring 12 für weitere Trag- und /oder Steuerseile und durchdringen dann die Hilfsoesen 7. Damit kann der Slider zunächst in der Waagerechten orientiert werden. Erst dann, wenn sich der Hauptschirm entfaltet hat und sich die Kammern 4 des Sliders gefüllt haben, löst der Springer die Riegel 9 wie bereits beschrieben.

Der Slider ist damit nur noch über die Führungsösen 6 gegenüber den Tragseilen und gegenüber dem Hauptschirm festgelegt. Er richtet sich selbsttätig im Luftstrom aus und fliegt eigenständig als weitere Tragfläche mit, sodass eine Erweiterung des Bereiches zurücklegbarer Strecken beim Gleiten gegeben ist.

### Bezugszeichen:

- Oberteil: 1
- Unterteil: 2
- Stege: 3
- Kammern: 4
- Diagonalstrebe: 5
- Führungsöse: 6
- Hilfsoesen: 7
- flexible Oese: 8
- Riegel: 9
- Führung: 10
- Seil: 11
- Führungsring: 12

## Patentansprüche

1. Slider für vorzugsweise Gleitschirme zur Koordination der Trag- und/oder Lenkseile mit in Gleitrichtung ausgerichteten Kammern (4), die Kammern (4) auf der nach oben gewandten Fläche des Grundkörpers sich nach oben hin erstreckend in Vielzahl vorhanden sind, die Form der Kammern (4) denen eines Gleitschirmes soweit ähnlich ist, dass sie an ihrer Vorderseite zum Zweck des Lufteintritts offen und vom Zuschnitt her so gestaltet sind, dass sich bei deren Aufwölben durch einströmende Luft ein Flügelprofil einstellt, in der unmittelbaren Randzone links und rechts jeweils mindestens eine Führungsoese (6) eingearbeitet ist, die einerseits zur Fixierung des Sliders in der Höhe an den Tragund Lenkseilen dient, zum anderen zu seinem Festlegen in Gleitrichtung und an der Hinterkante des Sliders im jeweiligen Eckbereich Hilfsoesen (7) für zu fixierende Führungsringe (12) eingearbeitet sind, **dadurch gekennzeichnet, dass** die nach oben gerichtete Fläche des Sliders umfassend mit diesen Kammern besetzt ist und dadurch, dass die Fixierung der Führungsringe (12) während des Gleitfluges lösbar ausgestaltet ist.

2. Slider nach Anspruch 1, **dadurch gekennzeichnet, dass** durch die Hilfsoese (7) jeweils eine seitlich herausstehende flexible Oese (8) geführt ist, die durch eine Art an der Unterseite des Sliders befestigten Riegel (9) gegen Herausrutschen aus der Hilfsoese (7) blockierbar und diese den Führungsring (12) umgreifend ausgestaltet ist.

3. Slider nach einem der Ansprüche 1 oder 2, **dadurch gekennzeichnet, dass** jede flexible Oese (8), bezogen auf den Slider, in diagonaler Richtung desselben hervorstehend angeordnet ist.

4. Slider nach einem der Ansprüche 1 bis 3, **dadurch gekennzeichnet, dass** jeweils zwei nebeneinanderliegende Kammern (4) durch jeweils mindestens eine quer zur Gleitrichtung angeordnete Diagonalstrebe (5) zwei Kammern (4) durchdringend ausgeführt ist, indem diese von links unten in einer ersten Kammer (4.1) den Steg zwischen der ersten Kammer (4.1) und einer zweiten Kammer (4.2) durchdringend nach rechts oben in der zweiten Kammer (4.2) und sich anschließend in der folgenden dritten Kammer (4.3) wieder den Steg (3) zwischen dritter Kammer (4.3) und einer vierten Kammer (4.4) durchdringend nach rechts unten in der Ecke der vierten Kammer (4) führend ausgebildet ist, wobei sich auf der anderen Seite eines weiteren Steges (3) die Diagonalstrebe (5) wieder nach oben führend anschließt.

5. Slider nach Anspruch 4, **dadurch gekennzeichnet, dass** der merkmalsgemäße Aufbau sich über die gesamte Breite des Sliders erstreckend ausgeführt ist.

6. Slider nach einem der Ansprüche 2 bis 5, **dadurch gekennzeichnet, dass** der an der Unterkante des Sliders geführte Riegel (9) als seitlich in die durch die Hilfsoese (7) hindurchragende flexible Oese (8) hineinragende riegelartig ausgeführte Schlinge eines Seiles (11) ausgeführt ist und an der Unterseite des Sliders die dort befindliche Führung (10) unterbrochen ist, sodass das Seil (11) partiell freiliegend ausgeführt ist.

## Claims

1. Slider for preferably paragliders for coordinating the supporting and/or steering lines, having chambers (4) oriented in the gliding direction, a multiplicity of the chambers (4) being present on the upwardly directed surface of the main body and extending upwards, the shape of the chambers (4) being similar to those of a paraglider to the extent where they are open on their front side for the purpose of allowing air to enter and are configured such that a wing profile is established when they open out as a result of air flowing in, the immediate peripheral zone has incorporated in it, on the left and right in each case, at least one guide eyelet (6), on the one hand for fixing the slider in height on the supporting and steering lines, and on the other hand for securing the slider in the gliding direction, and auxiliary eyelets (7) for guide rings (12) which are to be fixed in place are incorporated on the rear edge of the slider, in the corner region in each case, **characterized in that** the upwardly directed surface of the slider is provided with said chambers, and **in that** the fixing of the guide rings (12) is configured to be releasable when the paraglider is in flight.

2. Slider according to Claim 1, **characterized in that** a laterally projecting flexible lug (8) is guided through each of the auxiliary eyelets (7), and said lug can be blocked against sliding out of the auxiliary eyelet (7) by a type of catch (9) fastened on the underside of the slider and is configured to engage around the guide ring (12).

3. Slider according to either of Claims 1 and 2, **characterized in that** each flexible lug (8), in relation to the slider, is arranged to project in the diagonal direction of said slider.

4. Slider according to one of Claims 1 to 3, **characterized in that** in each case two adjacent chambers (4) have in each case at least one diagonal strut (5), arranged transversely to the gliding direction, passing through them, said diagonal strut being designed so that, from the bottom left in a first chamber (4.1), it passes through the crosspiece between the first chamber (4.1) and a second chamber (4.2) and leads to the top right in the second chamber (4.2) and then, in the following, third chamber (4.3), it passes once again through the crosspiece (3) between the third chamber (4.3) and a fourth chamber (4.4) and leads to the bottom right in the corner of the fourth chamber (4), wherein the diagonal strut (5) then leads upwards again on the other side of a further crosspiece (3).

5. Slider according to Claim 4, **characterized in that** the feature-specific construction extends over the entire width of the slider.

6. Slider according to one of Claims 2 to 5, **characterized in that** the catch (9), which is guided along the lower edge of the slider, is designed in the form of a catch-like loop of a cable (11), which projects laterally into the flexible lug (8) projecting through the auxiliary eyelet (7), and, on the underside of the slider, the guide (10) located there is interrupted, the cable (11) therefore being partially exposed.

## Revendications

1. Coulisseau, pour des parapentes de préférence, servant à la coordination des câbles porteurs et/ou de pilotage avec des compartiments (4) orientés dans la direction de glissement, lesdits compartiments (4) étant présents en grand nombre et s'étendant vers le haut au niveau de la surface du corps de base orientée vers le haut, la forme des compartiments (4) étant similaire à celle d'un parapente dans la mesure où ces compartiments sont ouverts au niveau de leur côté avant à des fins d'entrée d'air et sont réalisés en partant de la coupe à longueur de telle sorte qu'en cas de soulèvement du fait de l'air entrant, un profil d'aile apparaît dans la zone de bordure directe duquel, à gauche et à droite, respectivement au moins un oeillet de guidage (6) est réalisé, celui-ci servant d'une part à la fixation du coulisseau en hauteur aux câbles porteurs et/ou de pilotage et d'autre part à sa fixation dans la direction de glissement et que des oeillets auxiliaires (7) prévus pour les bagues de guidage (12) à fixer sont réalisés au niveau de l'arête arrière du coulisseau dans la zone de coin respective, **caractérisé en ce que** la surface orientée vers le haut du coulisseau est pourvue de ces compartiments et que la fixation des bagues de guidage (12) est configurée de façon amovible pendant le vol plané.

2. Coulisseau selon la revendication 1, **caractérisé en ce que** l'oeillet auxiliaire (7) permet respectivement de guider un oeillet (8) flexible saillant en côté, ledit oeillet étant configuré de façon à pouvoir être bloqué par une sorte de verrou (9) fixé au niveau du côté inférieur du coulisseau pour empêcher toute sortie hors de l'oeillet auxiliaire (7) et de façon à permettre audit oeillet d'engrener la bague de guidage (12).

3. Coulisseau selon l'une quelconque des revendications 1 ou 2, **caractérisé en ce que** chaque oeillet (8) flexible est disposé, par rapport au coulisseau, de façon saillante dans la direction diagonale de ce dernier.

4. Coulisseau selon l'une quelconque des revendications 1 à 3, **caractérisé en ce que** respectivement deux compartiments (4) placés côte à côte sont réalisés de façon à traverser deux compartiments (4) à travers respectivement au moins un hauban diagonal (5) disposé transversalement à la direction de glissement, ledit hauban étant réalisé de façon à traverser, d'en bas à gauche, dans un premier compartiment (4.1), l'étai entre le premier compartiment (4.1) et un deuxième compartiment (4.2), en haut vers la droite, dans le deuxième compartiment (4.2), puis à pénétrer ensuite de nouveau, dans le troisième compartiment (4.3) suivant, l'étai (3) entre le troisième compartiment (4.3) et un quatrième compartiment (4.4), en bas vers la droite, de façon guidée, dans le coin du quatrième compartiment (4), le hauban diagonal (5) étant de nouveau raccordé vers le haut sur l'autre côté d'un étai (3) supplémentaire.

5. Coulisseau selon la revendication 4, **caractérisé en ce que** la structure caractéristique est réalisée de façon à s'étendre sur toute la largeur du coulisseau.

6. Coulisseau selon l'une quelconque des revendications 2 à 5, **caractérisé en ce que** le verrou (9) guidé au niveau de l'arête inférieure du coulisseau est réalisé sous la forme d'une boucle de câble (11) réalisée à la façon d'un verrou saillant vers l'intérieur en côté dans l'oeillet (8) flexible saillant à travers l'oeillet auxiliaire (7) et que le guidage (10) s'y trouvant est interrompu au niveau du côté inférieur du coulisseau, de sorte que le câble (11) est réalisé de façon partiellement libre.
